# EUROPEAN PATENT SPECIFICATION

(11) **EP 0 569 938 B1**
(45) Date of publication and mention of the grant of the patent: **20.03.1996**
(21) Application number: 93107654.1
(22) Date of filing: 11.05.1993
(51) Int. Cl.: H01G 9/02, H01M 2/16

(54) **Separator for electrolytic capacitors**
Trennschicht für Elektrolytkondensatoren
Séparateur pour condensateurs électrolytiques

(30) Priority: 12.05.1992 JP 146434/92
(43) Date of publication of application: 18.11.1993
(73) Proprietor: Kuraray Co., Ltd., Kurashiki-shi Okayama-ken (JP); JAPAN VILENE COMPANY, Tokyo (JP)
(72) Inventor: Hayashi, Hideo, Yamatotakada-shi, Nara-ken (JP); Nakanishi, Shingo, Okayama-shi, Okayama-ken (JP); Kawai, Hiroyuki, Okayama-shi, Okayama-ken (JP); Sonetaka, Tomoyasu, Okayama-shi, Okayama-ken (JP); Mizobe, Akio, Okayama-shi, Okayama-ken (JP); Shimono, Naohiko, Satte-shi, Saitama-ken (JP)
(74) Representative: Kraus, Walter, Dr.

(56) References cited:
- PATENT ABSTRACTS OF JAPAN vol. 13, no. 404 (E-817) 7 September 1989 & JP-A-11 46 249
- PATENT ABSTRACTS OF JAPAN vol. 10, no. 050 (E-384) 27 February 1986& JP-A-60 202 661
- PATENT ABSTRACTS OF JAPAN vol. 8, no. 127 (E-250) 14 June 1984 & JP-A-59 037 648

## Description

This invention relates to a separator for electrolytic condensers and more particularly to a separator for electrolytic condensers which endows the condensers with excellent impedance because of its low density and exhibits excellent workability upon production of the condensers due to its high strength, and shows improved level of defectiveness due to short-circuiting.

Generally, electrolytic condensers has a casing which contains a condenser element impregnated with an electrolyte, the condenser element including metal foils, for example, foils of aluminum or tantalum, constituting positive and negative electrodes, and a separator made of paper or nonwoven fabric (hereinafter, the term "paper" is sometimes used instead of describing both paper and nonwoven fabric) sandwiched between the metal foils, with the resulting laminate being wound around and superimposed several times.

It is well known that in such electrolytic condensers, the separator has a great influence on the improvement of various characteristics of the condenser. It is also well known to decrease in impedance and tan δ in order to increase the performances of electrolysis condensers.

As conditions required for a separator in order to decrease its impedance, it is ideal to construct a condenser such that passage of current connecting the both electrodes is straight and of the minimum distance, and that fibers constituting the separator do not impede the current and almost all the area of the separator serves as a passage for the current. More specifically, the following conditions are required:
(1) the separator has a large space cross section;
(2) the separator is as thin as possible;
(3) the fiber constituting the separator have cross sections whose shapes are as close as possible to circles; and
(4) the diameters of the fibers are as small as possible.

However, it is practically difficult to meet the conditions (1), (2) and the conditions (3), (4) simultaneously. While synthetic fibers are in principle favourable since they satisfy the conditions (3), (4), attempts to obtain a separator satisfying the conditions (1), (2) using such synthetic fibers with view to decreasing impedance would fail because they have very low tenacities, which not only causes difficulty in winding operation in the production step of producing condensers but also hinders handling of condensers after production, thus increasing level of defectiveness due to short-circuiting.

Therefore, fibrous material used for such a separator for condensers are in the main natural vegetable fibers, and it is said the Manila hemp and craft pulp occupy 90 to 95% of the total material used.

There have been made some trials to use a mixed material obtained by mixing the vegetable fibers with synthetic fibers such as polypropylene fibers, polyethylene fibers, and polyester fibers. However, the density of such a mixed material is at most about 0.3 g/cm³, which corresponds to a tenacity of at most 0.5 kg/15 mm, with the result that there occurs hindrance not only winding operation but also handling thereafter to reduce yield of the products. In addition, decrease in impedance is not so much.

It has also been known to use a nonwoven fabric obtained by self-bonding of fine synthetic fibers in the production of separators. However, it is difficult to prepare low density paper made of synthetic fiber only which paper has a sufficient tenacity. In addition, since the material constituting the separator is a hydrophobic synthetic fiber, the separator has a poor affinity for electrolytes, which makes it difficult to achieve decrease in impedance aimed at. It may also be considered to attach a surfactant on the surface of the separator in order to obviate the defect in the affinity of the material. However, this has not been adopted practically yet.

Furthermore, among synthetic fibers, polyvinyl alcohol (hereinafter, abbreviated as "PVA") fibers are comprised basically by hydrophilic polymers, and hence they are free of the aforementioned problem of affinity for electrolytes encountered with the synthetic fibers described above and exhibit good paper making property, resulting in that paper having high tenacity and low density can be obtained therefrom with ease. However, even in this case, there is a certain limit in reduction in the density of paper with keeping paper tenacity by the use of conventional PVA fibers, that is, the paper density is at most about 0.28 g/cm³. Therefore, although its impedance increases considerably as compared with conventional hemp paper, it is still limited to a certain level (impedance ratio of about 80%).

Patent Abstracts of Japan, vol. 13, no. 404 (E-817), 7 September 1989 & JP-A-1 146 249 describes a separator made of a mixture of acetal and non-acetal polyvinyl alcohol fibres, in a weight ratio of 90:10 to 10:90. The fibres have a fineness of at most 0.055 tex (0.5 denier), and a different solubility depending on whether they are in the acetal or non-acetal form.

It is an object of this invention to provide an excellent separator, made of paper, for electrolytic condensers which retains paper tenacity enough to be free of difficulty in the production and handling of the condensers and maintain yield of products, and whose paper have low density uncomparable to conventional ones, thus giving rise to a considerably decreased impedance, as well as which can produce a condenser having a considerably decreased impedance.

The above-mentioned object of this invention is solved by a separator for electrolytic condensers made of paper or nonwoven fabric consisting of sparingly soluble polyvinyl alcohol fibers, as main fibers, having a monofilament fineness of at most 0.11 tex (1 dr) and having an in-water dissolution temperature higher than 90°C, and readily soluble polyvinyl alcohol fibers, as a binder for the main fibers, having an in-water dissolution temperature of 50-90°C, which is characterized in that the weight proportion of the main fibers to the binder fibers is 97:3-50:50, and that at least 10% by weight of said main fibers are composed of such sparingly soluble polyvinyl alcohol fibers whose transverse cross section has a non-circular shape with 3 to 6 protrusions radially extending from an axis substantially in the center of the fiber, and that the density of said separator is at most 0.25 g/cm³.

There can be obtained a very low impedance separator for electrolytic condensers having an impedance ratio of about 60% to about 50% based on a separator using Manila hemp alone described later on.

As described above, it is ideal in order for the passage of current connecting the positive and negative electrodes of the condenser to be of the minimum distance that the cross sections of the fibers constituting the separator are as close as possible to circles and their diameters are as small as possible so that the passage of current can be straight.

In this regard, use of main PVA fiber having a non-circular cross section which constitutes a separator in this invention is in a direction contradictory to the above concept. However, the present inventors have studied extensively based on an idea that if paper as a separator can be prepared that has a density as low as possible while keeping its tenacity, the effect of decrease in impedance due to low density is much greater and dominating than the effect of decrease in impedance due to the shape of the cross section of the fiber and the diameter of the fiber, and have completed this invention.

That is, gist of this invention is in the use of a PVA fiber having a non-circular cross section, typically a Y-shaped transverse cross section, as a main fiber, and a PVA fiber as a binder. Although detailed mechanism is unknown as to whether an entangling effect between fibers having non-circular cross sections and a bonding effect of a binder of the same quality cooperate synergistically, a very low density separator which still keeps practically required paper tenacity can be obtained instead of considerable decrease in the amount of the fiber used, that is, a separator for electrolysis condensers which has excellent impedance decreasing effect can be realized that has not been obtained conventionally.

In the separator of this invention, at least 10% by weight of the main fiber have a transverse cross section with a non-circular shape with 3 to 6, preferably 3 to 5, more preferably 3, protrusions radially extending from an axis substantially in the center of the fiber toward periphery of the fiber.

In the attached drawings, Fig. 1 shows an example of a Y-shaped non-circular cross section of a fiber; Fig. 2 shows an example of a circular cross section of a fiber; Fig. 3 shows an example of an X-shaped non-circular cross section of a fiber; Fig. 4 shows an example of an asteric non-circular cross section of a fiber; and Fig. 5 shows an example of an I-shaped non-circular cross section of a fiber.

The method of producing PVA fibers used in this invention is not limited particularly, and generally, they may be produced by a well known wet sDinning method. That is, an aqueous PVA solution as a spinning solution is sprayed from a nozzle in an alkali coagulating bath containing, for example, sodium hydroxide and salt cake (sodium sulfate), and dried, stretched, heat treated, and optionally acetalated, according to conventional methods.

PVA is a polymer which by nature has a high affinity for water. In order to producing a sparingly soluble fiber which can be self-supporting as a separator used in condensers from PVA as a starting material, it is sufficient to increase the degree of crystallinity and degree of crystal orientation and it is not always necessary to perform acetalation. However, it is generally the case that PVA is processed up to the step of acetalization, in which hydroxyl groups existing in non-crystalline region of PVA are acetalated with aldehydes such as formaldehyde. Acetalation to a degree of at least about 10 mol% is sufficient.

Here, the term "sparingly soluble" means that the paper does not dissolve when it is being prepared in the production step or impregnated with an electrolyte in a condenser, with keeping its shape as paper.

The readily soluble binder fiber can be obtained in the aforementioned production step without acetalation. What is essential is that it becomes in a dissolved state during the paper production step at an appropriate temperature elevating condition and can bond the main fibers. Such physical properties of the binder fiber can be obtained by properly adjusting treatment conditions in the aforementioned stretching, and heat steps. More specifically, it is sufficient that the binding fiber has a in-water dissolution temperature of 50 to 90°C.

In this invention, it is important that the sparingly soluble main fiber which constitutes the separator be blended with at least 10% by weight, preferably at least 30% by weight, based on total weight of the main fiber, of a sparingly soluble polyvinly alcohol fiber having a non-circular cross section and having a fineness of at most 0.11 tex (1 dr), and preferably at most 0.09 tex (0.8dr).

The non-circular cross section of the main fiber is a shape as viewed in a transverse cross section which has 3 to 6 protrusions (arm portions) radially extending from an axis substantially in the center of the fiber toward periphery of the fiber. More specific preferred fiber having a non-circular cross section includes those fibers having T-, Y-, and X-shaped, and asteric-shaped transverse cross section, respectively.

Fibers having a non-circular cross section as described above is used because the density of paper can be decreased by the shape in cross section of the fiber itself and use thereof in combination with a PVA binder can decrease the density greatly with practically maintaining the strength of the paper presumably such combined use in consequence minimizes coming loose of entangled fibers one from another although precise mechanism is unknown.

Fibers with so-called dumbbell-shaped cross sections obtained form such types of PVA fibers by a conventional wet-spinning method fail to achieve the object of this invention. Fibers with two protrusions (arm portions) extending from a substantially central axis of the fiber such as those fibers which have a cross sectional shape, as viewed in a transverse cross section, of so-called flat, dumbbel-shaped, U-shaped, L-shaped, or the like cross section, are arranged with the greater openings down upon, for example, paper making, and the height of the arranged fibers is lower than those fibers with three or more protrusions (arm portions). As a result, the resulting paper has a high density. However, if the fibers have 7 or more protrusions (arm portions), they are substantially equivalent to fibers having a circular cross section since a circumscribed circle described so as to encompass all the protrusions has a considerably large area occupied by the fiber portion, thus failing to exhibit the aforementioned effect.

Further, it is natural that the separator must have a small volume, and therefore it must be as thin as possible. However, the level of defectiveness due to internal short-circuiting increases with decreased thickness of the separator, resulting in that the separation function of the separator is deteriorated, and also that there occur obstructs in the handling during its production step. Therefore, it is not so easy a problem to obtain sufficient thinness of the separator and sufficient separation function simultaneously. When the fineness of the fiber constituting the separator is large, pores in the separator necessarily have large pore sizes than in the separator constituted by a fiber having a small fineness, and it is difficult to prevent the occurrence of internal short-circuiting due to the large pores. In order to improve this disadvantage, it would be possible to increase the thickness of the separator. However, this is contradictory to the basis requirements of the separator. Furthermore, the pores of the separator become smaller according as the fineness of the fiber constituting the separator increases, thus increasing the function of the separator. However, decrease in pore size means increase in the density of paper, which does not meet the fundamental requirement in the construction of separators that the fibers do not hinder current passing through the positive and negative electrodes and the total area of the separator serves as passage of the current.

After all, in this invention, it has been found by the present inventors that it is effective to use as the main fiber constituting a separator a PVA fiber having an non-circular cross section and a monofilament fineness of at most 0.11 tex (1 dr), preferably at most 0.09 tex (0.8dr), and more preferably 0.04 to 0,07 tex (0.4 to 0.6 dr).

This fiber has a diameter larger than that of a fiber having a circular cross section and having the same monofilament fineness. While this is contradictory to the idea of reducing the length of current passage, the peculiarity of the cross sectional shape can reduce the density of paper and increase paper tenacity. In addition, use of the aforementioned monofilament fineness can prevent increase in the thickness of the resulting separator.

While the use of the fiber having a non-circular cross section is effective even when only several percents of such a fiber is blended in the main fiber, it is blended in the main fiber in an amount of at least 10% by weight, preferably 30% by weight. The blending amount may be up to 100% by weight.

In order to achieve the object of this invention for obtaining a separator having a low paper density but a high paper tenacity, the main fiber other than the fiber having a non-circular cross section has to be a PVA fiber of the same quality as the fiber having a non-circular cross section and the binder, and it is important that this fiber has a monofilament fineness of at most 0.11 tex (1 dr), preferably at most 0.09 tex (0.8 dr), and more preferably 0.04 to 0.07 tex (0.4 to 0.6 dr) . This fiber does not have to be non-circular in cross section like the aforementioned fiber having a non-circular cross section but may be a sparingly soluble PVA fiber having an ordinary cross sectional shape such as circular cross section or the like.

It is desirable that the readily soluble binder PVA fiber can bind sparingly soluble PVA fibers as a main fiber in an amount as small as possible. That is, it is desirable for the fibers to be bound point to point lest the resulting paper after binding should have pores filled with the binder to form a continuous film of the binder thereon. The binder fiber in the paper obtained by binding the fibers may retain its shape as a fiber, which, however, is not mandatory. What is essential is that the fiber has a fineness as small as possible for the aforementioned object, and it is recommended to use fibers having a fineness of at most 0.11 tex (1.0 dr), preferably at most 0.09 tex(0.8 dr), and more preferably at most 0,07 tex (0.6 dr).

Weight proportion of the main PVA fiber to the binder PVA fiber is from 97 : 3 to 50 : 50, preferably from 97 : 3 to 60 : 40, and more preferably from 97 : 3 to 70 : 30. If the weight proportion of the binder fiber to the main fiber is below 3%, the strength of the resulting separator is insufficient while if it exceeds 50%, the binder composition is mostly in a molten state in the resulting paper, which prevents decrease in the density of paper. Therefore, both extremes are undesirable.

The method of preparing paper or nonwoven fabric using these fibers include a wet making method and a dry making method. In the former method, the main fibers and the binder fibers are well dispersed in water, paper is made from the dispersion using a short net paper machine or a round net paper machine, the wet paper obtained is wound around a heated drum for drying and for dissolving the binder fibers to bind the main fibers, and thus paper is obtained. In this case, it is preferred that the main fibers and the binder fibers are cut to a length of 1 to 10 mm, and preferably 2 to 5 mm in order to obtain particularly good paper making property. In the latter dry method, the main fibers and the binder fibers are mixed in a hopper mixer, the mixture is passed through a card to form a web of a uniform thickness, heated steam is sprayed to this web, and the wetted web is dried over a heated drum to dry it, thus obtaining a nonwoven fabric including the main fibers bonded with the binder fibres. In this case, fibers of 10 to 100 mm long, preferably 30 to 70 mm, are used.

Using the starting material and production method as described above, paper or nonwoven fabric can be made to have a density of at most 0.25 g/cm³, and a tensile strength of at least 1.0 kg/15 mm, preferably at least 1.5 kg/15 mm, which can be which can be used as a separator for condensers with ease and which has a very low impedance.

The term "impedance ratio" as used herein refers to a ratio of the impedance of a separator to the resistivity of a separator made consisting of 100% Manila hemp and having a thickness of 40 µm, a density of 0.50 g/cm³ with the resistivity being taken 100.

The impedance ratio was measured concretely by the following method.

### Method of Measurement of Impedance Ratio

Load (200 g) was placed on a separator impregnated with an electrolyte (resistivity: 100 Ω·cm) containing ethylene glycol having dissolved therein ammonium adipate and sandwiched between platinum electrodes (5 cm), and resistance between the electrodes was measured at a temperature of 20°C ± 0.5°C, using a Kohlrausch bridge with applying at current of 10 V and 100 KHz.

### EXAMPLES

Hereinafter, this invention will be described concretely by examples.

### Production Method for Sparingly Soluble PVA Fiber

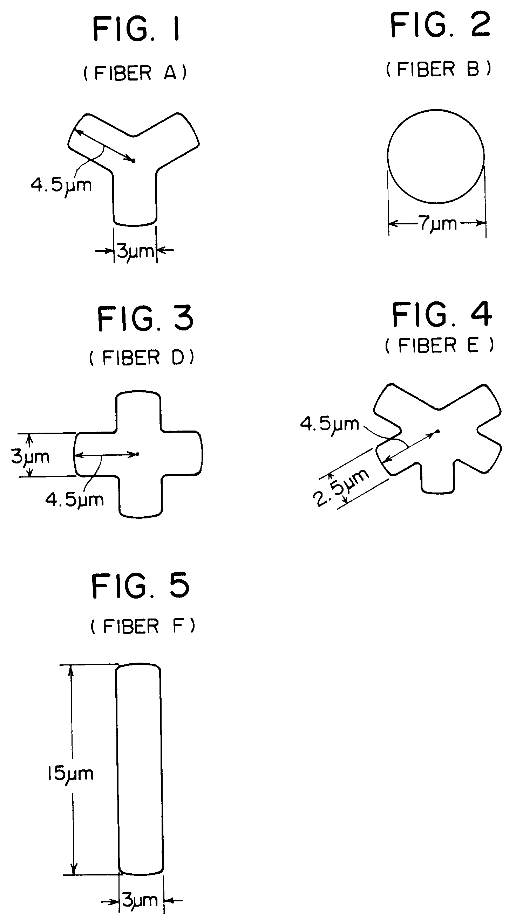

Completely saponified PVA was dissolved in water to a concentration of 15%, followed by addition of 1.5% by weight based on the weight of PVA of boric acid thereto to prepare a spinning solution. This was wet-spun through a spinneret provided with a nozzle hole with an opening having a Y-shaped cross section into a coagulating bath consisting of 30 g/liter of sodium hydroxide, and 300 g/liter of salt cake (sodium sulfate). The filament obtained was roll-stretched, neutralized, wet-heat-stretched, washed with water and then dried as in the conventional method. Thereafter, the filament was dry-heat-stretched at 230°C at a total stretch ratio of 10 times the original length, followed by acetalation with an aqueous solution containing 30 g/liter of formaldehyde, 200 g/liter of sulfuric acid, 150 g/liter of salt cake at 70°C to produce a sparingly soluble PVA fiber having a monofilament fineness of 0.05 tex (0.5 dr), an in-water dissolution temperature of at least 103°C. The fiber had a Y-shaped cross section which closely resembled the shape of the nozzle hole as shown in Fig. 1 This fiber is named a main fiber A.

Further, under the same production conditions as above except that the shape of the nozzle hole was changed to circular one, a sparingly soluble PVA fiber having a circular cross section as shown in Fig. 2 was produced which had a monofilament fineness of 0.05 tex (0,5 dr), and an in-water dissolution temperature of at least 103°C. This fiber was named a main fiber B.

The production method for producing the main fiber A was repeated except that the shape of the nozzle hole was changed to an X-shaped one to obtain a sparingly soluble PVA fiber having a monofilament fineness of 0.07 tex (0.6 dr), and an in-water dissolution temperature of at least 103°C. This had a cross section at shown in Fig. 3. This fiber was named a main fiber D.

The production method for producing the main fiber A was repeated except that the shape of the nozzle hole was changed to an asteric-shaped one to obtain a sparingly soluble PVA fiber having a monofilament fineness of 0.05 tex (0.5 dr), and an in-water dissolution temperature of at least 103°C. This had a cross section as shown in Fig 4. This fiber was named a main fiber E.

The production method for producing the main fiber A was repeated except that the shape of the nozzle hole was changed to an I-shaped one to obtain a sparingly soluble PVA fiber having a monofilament fineness of 0.07 tex (0.6 dr), and an in-water dissolution temperature of at least 103°C. This had a cross section as shown in Fig 5. This fiber was named a main fiber F.

### Production Method for Readily Soluble PVA Fiber

Completely saponified PVA was dissolved in water to a concentration of 15% to prepare a spinning solution. This was wet-spun through a spinneret provided with a nozzle hole with an opening having a circular cross section into a coagulating bath consisting of saturated salt cake (sodium sulfate) solution. The filament obtained was roll-stretched, wet-heat-stretched, and then dried as in the conventional method, having a monofilament fineness of 0.07 tex (0.6 dr), an in-water dissolution temperature of 70°C. This fiber was named a binder fiber C.

### Example 1

Main fiber A (80 parts by weight) previously cut to a fiber length of 3 mm, and 20 parts by weight of binder fiber C also cut to a fiber length of 3 mm were well dispersed in water, and paper was made by a wet method from the dispersion using a round net paper machine. The wet paper was introduced on a heated drum to dissolve the fiber C to bond the main fibers A to form a separator of this invention. This separator had a thickness of 40 µm, a density of 0.16 g/cm³, a paper tenacity of 2.1 kg/15 mm, and an impedance ratio of 49% based on impedance at 20°C and 100 KHz of a separator made of Manila hemp.

### Comparative Example 1

Main fiber B (80 parts by weight) previously cut to a fiber length of 3 mm, and 20 parts by weight of binder fiber C also cut to a fiber length of 3 mm were well dispersed in water, and paper was made by a wet method from the dispersion using a round net paper machine. The wet paper was introduced on a heated drum to dissolve the fiber C to bond the main fibers B to form a separator. This separator was produced so that it had a low density. However, it has thickness of 40 µm, a density of 0.29 g/cm³, a paper tenacity of 0.9 kg/15 mm. Thus, while it was able to increase the paper tenacity but decrease of the density reached plateau and was insufficient. In this comparative example, an impedance ratio was 80% based on impedance at 20°C and 100 KHz of a separator made of Manila hemp.

### Example 2

Main fiber A (95 parts by weight) previously cut to a fiber length of 40 mm, and 5 parts by weight of binder fiber C also cut to a fiber length of 40 mm were mixed in a mixer, and the mixture was passed through a card to prepare a web. Steam at 100°C was sprayed onto the web, and the wet web was introduced on a heated drum to dissolve the binder fiber C to obtain a separator made of a nonwoven fabric.

The separator had a thickness of 40 µm, a density of 0.18 g/cm³, a paper tenacity of 1.6 kg/15 mm and an impedance ratio was 55% based on impedance at 20°C and 100 KHz of a separator made of Manila hemp.

### Example 3

Main fiber A (30 parts by weight) and main fiber B (50 parts by weight), both previously cut to a fiber length of 4 mm, and 20 parts by weight of binder fiber C cut to a fiber length of 3 mm were well dispersed in water, and paper was made by a wet method using a round net paper machine in the same manner as in Example 1. The wet paper thus obtained was introduced on a heated drum to form a separator made of the main fiber A and B of this invention. The separator had a thickness of 40 µm, a density of 0.22 g/cm³, a paper tenacity of 2.6 kg/15 mm, and an impedance ratio was 58% based on impedance at 20°C and 100 KHz of a separator made of Manila hemp.

### Example 4

Main fiber A (12 parts by weight) and main fiber B (68 parts by weight), both previously cut to a fiber length of 3 mm, and 20 parts by weight of binder fiber C also cut to a fiber length of 3 mm were well dispersed in water, and paper was made by a wet method using a round net paper machine in the same manner as in Example 1. The wet paper thus obtained was introduced on a heated drum to dissolve the binder fiber C to bond the main fibers with each other to form a separator of this invention. The separator had a thickness of 40 µm, a density of 0.24 g/cm³, a paper tenacity of 1.1 kg/15 mm, and an impedance ratio was 59% based on impedance at 20°C and 100 KHz of a separator made of Manila hemp.

### Example 5

Main fiber D (80 parts by weight) previously cut to a fiber length of 3 mm, and 20 parts by weight of binder fiber C also cut to a fiber length of 3 mm were well dispersed in water, and paper was made by a wet method using a round net paper machine in the same manner as in Example 1. The wet paper thus obtained was introduced on a heated drum to dissolve the binder fiber C to bond the main fibers with each other to form a separator this invention. The separator had a thickness of 40 µm, a density of 0.17 g/cm³, a paper tenacity of 2.4 kg/15 mm, and an impedance ratio was 53% based on impedance at 20°C and 100 KHz of a separator made of Manila hemp.

### Example 6

Main fiber D (30 parts by weight) and main fiber B (50 parts by weight), both previously cut to a fiber length of 4 mm, and 20 parts by weight of binder fiber C also cut to a fiber length of 3 mm were well dispersed in water, and paper was made by a wet method using a round net paper machine in the same manner as in Example 1. The wet paper thus obtained was introduced on a heated drum to dissolve the binder C to bond the main fibers with each other to form a separator of this invention. The separator had a thickness of 40 µm, a density of 0.23 g/cm³, a paper tenacity of 3.1 kg/15 mm, and an impedance ratio was 59% based on impedance at 20°C and 100 KHz of a separator made of Manila hemp.

### Example 7

Main fiber E (80 parts by weight) previously cut to a fiber length of 3 mm, and 20 parts by weight of binder fiber C also cut to a fiber length of 3 mm were well dispersed in water, and paper was made by a wet method using a round net paper machine in the same manner as in Example 1. The wet paper thus obtained was introduced on a heated drum to dissolve the binder fiber C to bond the main fibers with each other to form a separator this invention. The separator had a thickness of 40 µm, a density of 0.23 g/cm³, a paper tenacity of 2.8 kg/15 mm, and an impedance ratio was 60% based on impedance at 20°C and 100 KHz of a separator made of Manila hemp.

### Comparative Example 2

Main fiber F (80 parts by weight) previously cut to a fiber length of 4 mm, and 20 parts by weight of binder fiber C also cut to a fiber length of 3 mm were well dispersed in water, and paper was made by a wet method using a round net paper machine in the same manner as in Example 1. The wet paper thus obtained was introduced on a heated drum to dissolve the binder C to bond the main fibers with each other to form a separator of this invention. The separator had a thickness of 40 µm, a density of 0.30 g/cm³, a paper tenacity of 3.6 kg/15 mm, and an impedance ratio was 86% based on impedance at 20°C and 100 KHz of a separator made of Manila hemp.

**Table 1**

| | Separator | | |
|---|---|---|---|
| | Density (g/cm³) | Impedance Ratio (%) | Paper Tenacity (kg/15 mm) |
| Example 1 | 0.16 | 49 | 2.1 |
| Example 2 | 0.18 | 55 | 1.6 |
| Example 3 | 0.22 | 58 | 2.6 |
| Comparative Example 1 | 0.29 | 80 | 0.9 |
| Example 4 | 0.24 | 59 | 1.1 |
| Example 5 | 0.17 | 53 | 2.4 |
| Example 6 | 0.23 | 59 | 3.1 |
| Example 7 | 0.23 | 60 | 2.8 |
| Comparative Example 2 | 0.30 | 86 | 3.6 |
| Control Hemp Separator | 0.35 | 100 | 3.2 |

Table 1 above shows results of the examples and comparative examples above in comparison with the performance of the separator using hemp. As shown in Table 1, the characteristics of the separators of this invention are excellent in that decrease in impedance is remarkable as compared with the electrolysis condenser using a separator made of hemp. Also, the separators of this invention have the same level of tenacity as the separator made of ordinary PVA fiber or more increased than it and in addition have a further decreased density instead of such tenacity, so that the impedance of the resulting condensers can be decreased greatly.

In the construction of the separator of this invention as specified in claim 1, a separator for electrolytic condensers is totally comprised by PVA fibers including a PVA fiber having a non-circular cross section as a main fiber and a PVA fiber as a binder, and for this reason a separator can be obtained which has a very low density while maintaining a high strength. As a result, a very low impedance ratio can be realized, and a condenser having high performance can be produced with ease, whose production on an industrial scale can be performed with high workability, and which suffers from less occurrence of short-circuiting.

## Claims

1. A separator for electrolytic condensers made of paper or nonwoven fabric consisting of sparingly soluble polyvinyl alcohol fibers, as main fibers, having a monofilament fineness of at most 0.11 tex (1 dr) and having an in-water dissolution temperature higher than 90°C, and readily soluble polyvinyl alcohol fibers, as a binder for the main fibers, having an in-water dissolution temperature of 50-90°C, characterized in that the weight proportion of the main fibers to the binder fibers is 97:3-50:50, and that at least 10% by weight of said main fibers are composed of such sparingly soluble polyvinyl alcohol fibers whose transverse cross section has a non-circular shape with 3 to 6 protrusions radially extending from an axis substantially in the center of the fiber, and that the density of said separator is at most 0.25 g/cm³.

2. The separator for electrolytic condensers as claimed in claim 1, wherein said main fibers have a monofilament fineness of at most 0.09 tex (0.8 dr).

3. The separator for electrolytic condensers as claimed in claims 1 or 2, wherein said transverse cross section of said sparingly soluble polyvinyl alcohol fibers having a non-circular shape has a shape selected from the group consisting of T-letter, Y-letter, X-letter and asterisk.

4. The separator for electrolytic condensers as claimed in any one of claims 1 to 3, wherein said sparingly soluble polyvinyl alcohol fibers having a non-circular cross section occupy at least 30% weight of said main fibers.

## Patentansprüche

1. Separator für Elektrolyt-Kondensatoren aus Papier oder textilem nichtgewebtem Flächengebilde, bestehend aus gering löslichen Polyvinylalkohol-Fasern als Hauptfasern mit einer Monofilament-Feinheit von höchstens 0,11 tex (1 dr) und mit einer Auflösungstemperatur in Wasser von höher als 90°C sowie leicht löslichen Polyvinylalkohol-Fasern als Bindemittel für die Hauptfasern mit einer Auflösungstemperatur in Wasser von 50 bis 90°C, dadurch **gekennzeichnet** , daß das Gewichtsverhältnis der Hauptfasern zu den Bindemittelfasern 97:3 bis 50:50 beträgt und daß mindestens 10 Gew.-% der Hauptfasern aus solchen gering löslichen Polyvinylalkohol-Fasern bestehen, deren Querschnitt eine nichtkreisförmige Gestalt mit 3 bis 6 Vorsprüngen aufweist, die sich radial von einer Achse im wesentlichem im Zentrum der Faser erstrecken, und daß die Dichte des Separators höchstens 0,25 g/cm³ beträgt.

2. Separator für Elektrolyt-Kondensatoren nach Anspruch 1, dadurch **gekennzeichnet**, daß die Hauptfasern eine Monofilament-Feinheit von höchstens 0,09 tex (0,8 dr) haben.

3. Separator für Elektrolyt-Kondensatoren nach Anspruch 1 oder 2, dadurch **gekennzeichnet**, daß der Querschnitt der gering löslichen Polyvinylalkohol-Fasern mit nichtkreisförmiger Gestalt eine Gestalt aufweist, die aus der Gruppe bestehend aus T-Buchstaben, Y-Buchstaben, X-Buchstaben und Sternchen ausgewählt ist.

4. Separator für Elektrolyt-Kondensatoren nach einem der Ansprüche 1 bis 3, dadurch **gekennzeichnet**, daß die gering löslichen Polyvinylalkohol-Fasern mit einem nichtkreisförmigen Querschnitt mindestens 30 Gew.-% der Hauptfasern einnehmen.

## Revendications

1. Séparateur pour condensateurs électrolytiques fait en papier ou en étoffe non tissée composés de fibres d'alcool polyvinylique difficilement solubles, comme fibres principales, ayant une finesse monofilament maximum de 0,11 tex (1 dr) et ayant une température de dissolution dans l'eau supérieure à 90° C, et de fibres d'alcool polyvinylique facilement solubles, comme liant pour les fibres principales, ayant une température de dissolution dans l'eau comprise entre 50° et 90° C, caractérisé en ce que la proportion en poids desdites fibres principales par rapport aux fibres liantes est de 97 : 3 - 50 : 50, et en ce qu'au moins 10 % en poids desdites fibres principales sont composés de ces fibres d'alcool polyvinylique difficilement solubles dont la section droite transversale a une forme non circulaire avec 3 à 6 saillies partant radialement d'un axe sensiblement au centre de la fibre, et en ce que la densité dudit séparateur est au maximum de 0,25 g/cm³.

2. Séparateur pour condensateurs électrolytiques selon la revendication 1, dans lequel lesdites fibres principales ont une finesse monofilament maximum de 0,09 tex (0,8 dr).

3. Séparateur pour condensateurs électrolytiques selon la revendication 1 ou 2, dans lequel ladite section droite transversale desdites fibres d'alcool polyvinylique difficilement solubles ayant une forme non circulaire, a une forme choisie parmi le groupe composé de la lettre T, de la lettre Y, de la lettre X et de l'astérisque.

4. Séparateur pour condensateurs électrolytiques selon l'une des revendications 1 à 3, dans lequel lesdites fibres d'alcool polyvinylique difficilement solubles ayant une section droite non circulaire occupent au moins 30 % du poids desdites fibres principales.
